# EUROPEAN PATENT APPLICATION

(11) **EP 2 851 380 A1**
(43) Date of publication of application: **25.03.2015**
(21) Application number: 13790192.2
(22) Date of filing: 30.04.2013
(51) Int. Cl.: C08G 59/14, C08G 59/50, C08J 5/24, C08L 63/00

(54) **CURABLE RESIN COMPOSITION, CURED PRODUCT THEREOF, PREPREG, AND FIBER-REINFORCED COMPOSITE MATERIAL**

(30) Priority: 16.05.2012 JP 2012112173
(71) Applicant: Daicel Corporation, Osaka-shi, Osaka 530-0001 (JP)
(72) Inventor: SAKANE, Masanori, Ohtake-shi Hiroshima 739-0695 (JP)
(74) Representative: Grünecker, Kinkeldey, Stockmair & Schwanhäusser
(86) International application number: PCT/JP2013/062598
(87) International publication number: WO 2013/172199

(57) **Abstract**

Provided is a curable resin composition capable of forming a highly heat-resistant cured product. The curable resin composition includes an epoxy-amine adduct (A) and an epoxy compound (B),
in which:
the epoxy-amine adduct (A) has two or more amino groups per molecule and is obtained by a reaction of an epoxy compound (i) having two or more alicyclic epoxy groups per molecule with an amine compound (ii) having two or more amino groups per molecule; and
the epoxy compound (B) is other than the epoxy compound (i) and has two or more epoxy groups per molecule.

## Description

### Technical Field

The present invention relates to: curable resin compositions and cured products thereof; prepregs obtained by impregnating or coating reinforcing fibers with the curable resin compositions; and fiber-reinforced composite materials obtained by curing the prepregs.

### Background Art

Curable resin compositions containing epoxy compounds (curable epoxy resin compositions) have been widely used in various uses such as adhesives and structural materials. In recent technologies, fiber-reinforced composite materials have been developed intensively, where the fiber-reinforced composite materials are prepared by curing the curable epoxy resin compositions to give cured products, and further reinforcing the cured products with reinforcing fibers such as carbon fibers. The fiber-reinforced composite materials are lightweight and tough and, utilizing these characteristic properties, are expected to be applied as materials typically for automobile parts, civil engineering and construction equipment, wind turbine blades, sports equipment, aircraft, ships, robots, and cables.

As examples of the curable epoxy resin compositions, there are known resin compositions that include an epoxy compound and a polyamine compound acting as a curing agent and are capable of forming cured products by a reaction between an epoxy group and an amino group, where the reaction is induced by heating. Specifically, there is disclosed a thermosetting resin composition including (a) one alicyclic epoxy resin containing at least two 1,2-epoxy groups per molecule; (b) a specific aromatic diamine curing agent; and (c) a structure fiber (see Patent Literature 1). The literature mentions that the thermosetting resin composition features a high glass transition temperature, low moisture absorption, and good mechanical properties.

### Citation List

### Patent Literature

PTL 1: Japanese Unexamined Patent Application Publication (JP-A) No. S62-164715

### Summary of Invention

### Technical Problem

Disadvantageously, however, a cured product obtained by a reaction of an alicyclic epoxy resin with a polyamine compound as in the thermosetting resin composition disclosed in PTL 1 includes the alicyclic epoxy resin remaining as unreacted and thereby offers poor heat resistance (thermal stability).

Accordingly, an object of the present invention is to provide a curable resin composition capable of forming a cured product having excellent heat resistance.

Another object of the present invention is to provide a cured product (cured resin) having excellent heat resistance.

Yet another object of the present invention is to provide a fiber-reinforced composite material excellent in heat resistance and toughness, where the fiber-reinforced composite material is obtained by impregnating or coating a reinforcing fiber with the curable resin composition to give a prepreg; and curing the prepreg.

### Solution to Problem

After intensive investigations to achieve the objects, the inventor has found that a specific curable resin composition can give a cured product having excellent heat resistance, where the curable resin composition contains an epoxy compound, and one of an epoxy-amine adduct having a specific structure and an epoxy-amine adduct obtained by a reaction of a specific epoxy compound with a specific amine compound; and that the curable resin composition can give a fiber-reinforced composite material excellent in heat resistance and toughness, by coating or dispersing a reinforcing fiber with or in the curable resin composition to give a prepreg, and curing the prepreg. The present invention has been made based on these findings.

Specifically, the present invention provides a curable resin composition containing: an epoxy-amine adduct (A); and an epoxy compound (B), in which:
the epoxy-amine adduct (A) has two or more amino groups per molecule and is obtained by a reaction of an epoxy compound (i) having two or more alicyclic epoxy groups per molecule with an amine compound (ii) having two or more amino groups per molecule; and
the epoxy compound (B) is other than the epoxy compound (i) and has two or more epoxy groups per molecule.

The epoxy compound (i) may be a compound represented by Formula (a): 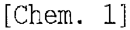 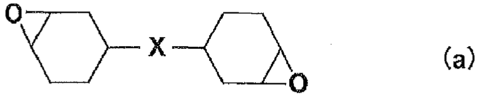 where X is selected from a single bond and a divalent group having at least one atom.

The amine compound (ii) may be a compound represented by Formula (b):
[Chem. 2]

R²(NH₂)r (b)

where R² represents an organic group having a valency of r and having a carbon atom at each bonding site with the nitrogen atom specified in the formula; and r represents an integer of 2 or more.

The present invention further provides a curable resin composition containing: an epoxy-amine adduct (A') represented by Formula (I); and an epoxy compound (B) being selected from the group consisting of epoxy compounds with two or more epoxy groups per molecule and excluding epoxy compounds having two or more alicyclic epoxy groups per molecule, where Formula (I) is expressed as follows: 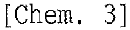 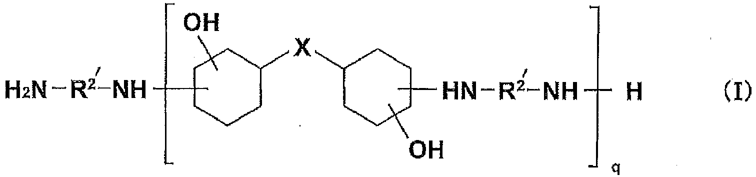 where R^{2'} represents, in each occurrence independently, a divalent organic group having a carbon atom at each bonding site with the nitrogen atom specified in the formula; X is, in each occurrence independently, selected from a single bond and a divalent group having at least one atom; and q represents an integer of 1 or more.

The curable resin composition may be used as a resin composition for a fiber-reinforced composite material.

The present invention further provides a cured product of the curable resin composition.

The present invention still further provides a prepreg including the curable resin composition; and a reinforcing fiber impregnated or coated with the curable resin composition.

In addition and advantageously, the present invention provides a fiber-reinforced composite material as a cured product of the prepreg.

### Advantageous Effects of Invention

The curable resin composition according to the present invention has the configuration and, upon curing, gives a cured product that is highly resistant to heat. In addition, the curable resin composition according to the present invention gives a fiber-reinforced composite material excellent in heat resistance and toughness, by coating or impregnating a reinforcing fiber with the curable resin composition to give a prepreg, and curing the prepreg.

### Brief Description of Drawings

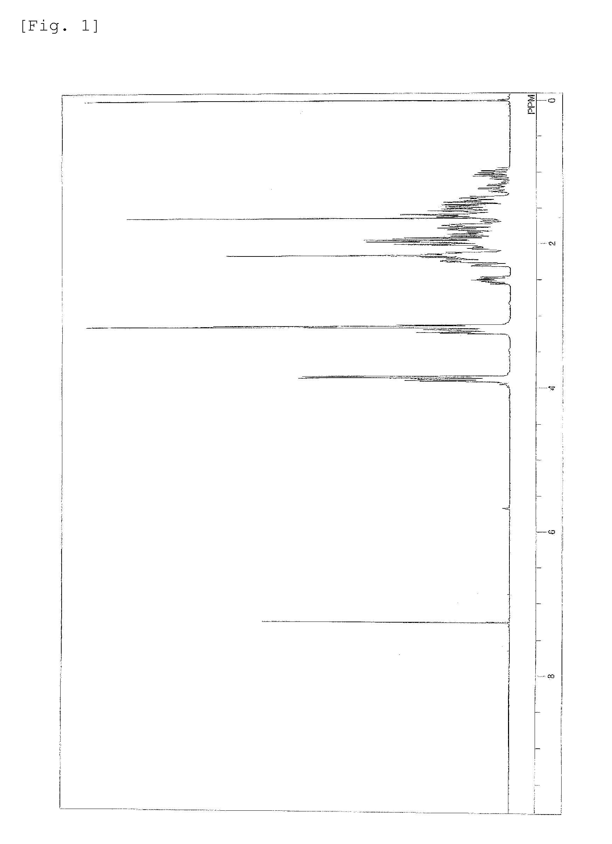

[Fig. 1] Fig. 1 depicts a ¹H-NMR spectrum chart of an epoxy compound (CELLOXIDE 2021P) used as a raw material for epoxy-amine adducts prepared in Production Examples 1 to 4.

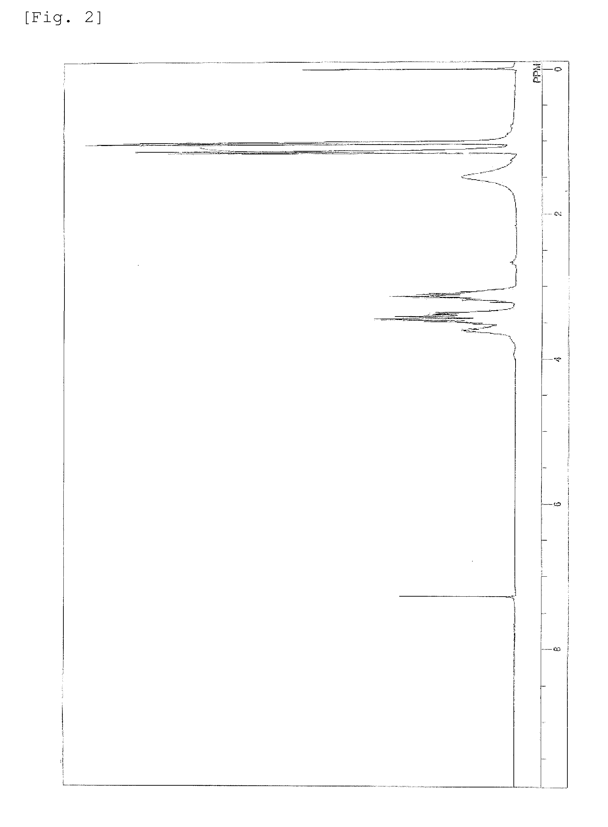

[Fig. 2] Fig. 2 depicts a ¹H-NMR spectrum chart of an amine compound (JEFFAMINE D-230) used as a raw material for the epoxy-amine adducts prepared in Production Examples 1 to 4.

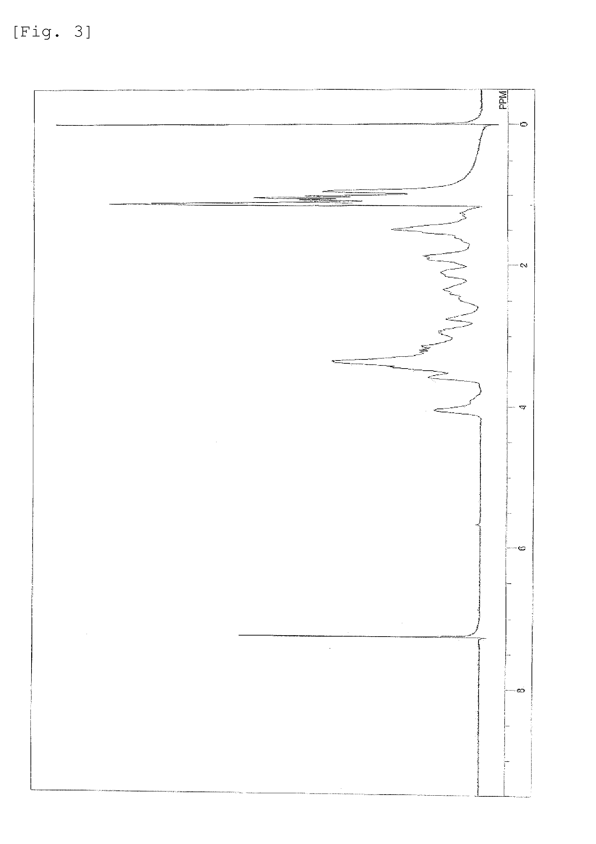

[Fig. 3] Fig. 3 depicts a ¹H-NMR spectrum chart of the epoxy-amine adduct obtained in Production Example 1.

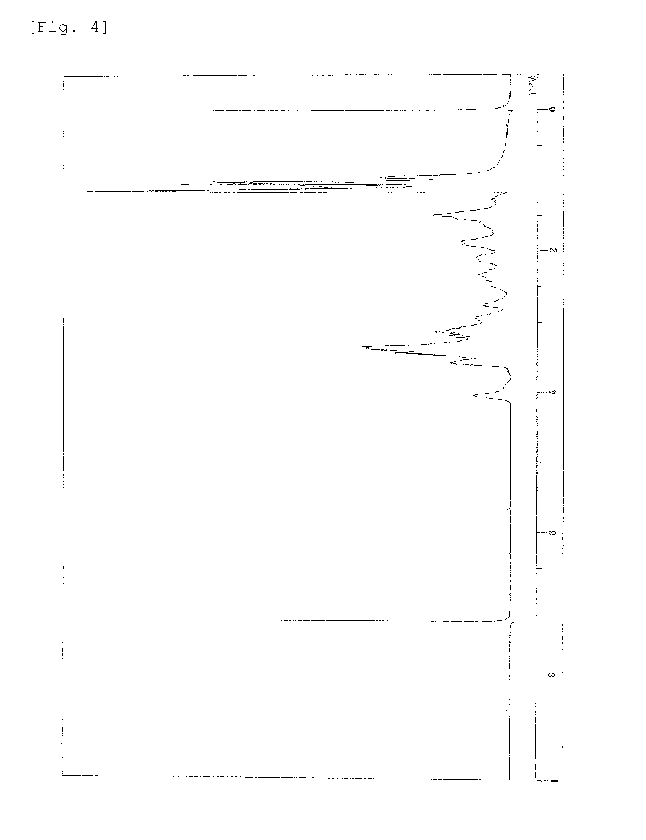

[Fig. 4] Fig. 4 depicts a ¹H-NMR spectrum chart of the epoxy-amine adduct obtained in Production Example 2. Description of Embodiments

### Curable Resin Composition

The curable resin composition (curable epoxy resin composition) according to an embodiment of the present invention is a resin composition essentially containing an epoxy-amine adduct (A) and an epoxy compound (B) as described below.

### Epoxy-amine Adduct (A)

The epoxy-amine adduct (A) for use in the curable resin composition according to the present invention is an epoxy-amine adduct that has two or more amino groups per molecule and is obtained by a reaction of an epoxy compound (i) with an amine compound (ii). The "epoxy compound (i)" refers to an epoxy compound having two or more alicyclic epoxy groups per molecule; whereas the amine compound (ii) refers to an amine compound having two or more amino groups per molecule. The epoxy-amine adduct is also referred to as an "amine adduct." More specifically, the epoxy-amine adduct (A) is an epoxy-amine adduct that has two or more amino groups per molecule and is obtained by a reaction of the alicyclic epoxy groups of the epoxy compound (i) and the amino groups of the amine compound (ii). As used herein the term "amino group" refers to -NH₂ (unsubstituted amino group) unless otherwise specified; whereas the term "-NH- group" does not include the unsubstituted amino group (-NH₂).

### Epoxy Compound (i)

The epoxy compound (i) serving as a raw material (precursor) to form the epoxy-amine adduct (A) is a polyepoxy compound (alicyclic epoxy compound) having two or more alicyclic epoxy groups per molecule. As used herein the term "alicyclic epoxy group" refers to an epoxy group composed of: an oxygen atom; and adjacent two carbon atoms constituting an alicycle (aliphatic ring).

The alicyclic epoxy groups of the epoxy compound (i) are not limited, but are exemplified by epoxy groups each composed of an oxygen atom and adjacent two carbon atoms constituting a C₄-C₁₆ aliphatic ring (aliphatic hydrocarbon ring) such as cyclobutane, cyclopentane, cyclohexane, or cycloheptane ring. Among them, epoxy groups (cyclohexene oxide groups) composed of an oxygen atom and two carbon atoms constituting a cyclohexane ring are preferred as the alicyclic epoxy groups.

The epoxy compound (i) may have alicyclic epoxy groups in a number not critical, as long as being 2 or more, but preferably from 2 to 6, more preferably from 2 to 5, and furthermore preferably 2 or 3 per molecule. The epoxy compound (i), if having the alicyclic epoxy groups in a number greater than 6, may cause the epoxy-amine adduct (A) to be hardly blended with another component (e.g., the epoxy compound (B)).

As the epoxy compound (i), particularly preferred are compounds (epoxy compounds) represented by Formula (a):

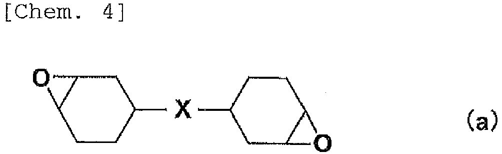

In Formula (a), X is selected from a single bond and a linkage group (divalent group having at least one atom). The linkage group is exemplified by divalent hydrocarbon groups, carbonyl group, ether bond, ester bond, carbonate group, amido group, and groups each including two or more of these groups linked to each other.

The epoxy compound (i) of Formula (a), where X is a single bond, is 3,4,3',4'-diepoxybicyclohexane.

The divalent hydrocarbon group is exemplified by C₁-C₁₈ linear or branched chain alkylene groups and divalent alicyclic hydrocarbon groups. The C₁-C₁₈ linear or branched chain alkylene groups are exemplified by methylene, methylmethylene, dimethylmethylene, ethylene, propylene, and trimethylene groups. The divalent alicyclic hydrocarbon groups are exemplified by divalent cycloalkylene groups (including cycloalkylidene groups), such as 1,2-cyclopentylene, 1,3-cyclopentylene, cyclopentylidene, 1,2-cyclohexylene, 1,3-cyclohexylene, 1,4-cyclohexylene, and cyclohexylidene groups.

Among them, the linkage group X is preferably an oxygen-containing linkage group which is exemplified by -CO-, -O-CO-O-, -CO-O-, -O-, and -CO-NH-; groups each including two or more of these groups linked to each other; and groups each including one or more of these groups and one or more of divalent hydrocarbon groups linked to each other. The divalent hydrocarbon groups are as exemplified above.

Typical examples of the alicyclic epoxy compounds represented by Formula (a) include compounds represented by Formulae (a-1) to (a-10). In Formulae (a-5) and (a-7), 1 and m each independently represent an integer from 1 to 30. R¹ in Formula (a-5) represents, in each occurrence independently, a C₁-C₈ alkylene group and is exemplified by linear or branched chain alkylene groups such as methylene, ethylene, propylene, isopropylene, butylene, isobutylene, s-butylene, pentylene, hexylene, heptylene, and octylene groups. Among them, preferred are C₁-C₃ linear or branched chain alkylene groups such as methylene, ethylene, propylene, and isopropylene groups. In Formulae (a-9) and (a-10), n1 to n6 each independently represent an integer from 1 to 30.

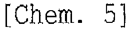

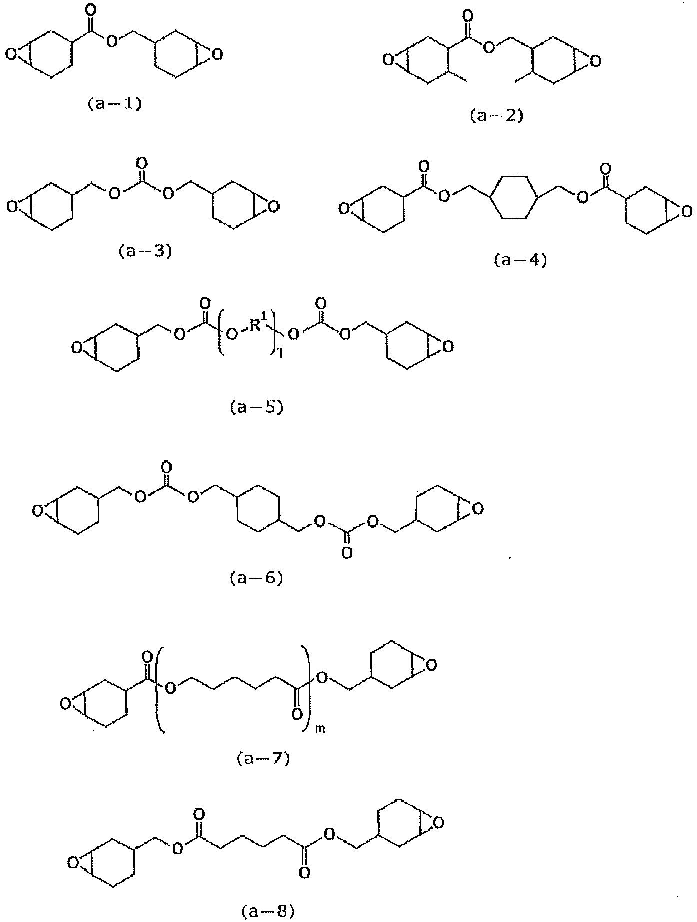

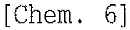

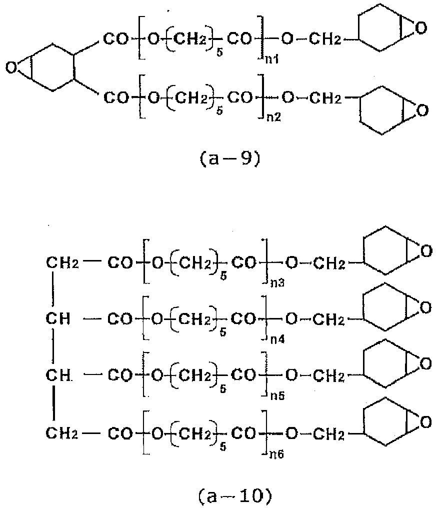

Of the compounds represented by Formula (a), preferred is the compound represented by Formula (a-1) [3,4-epoxycyclohexylmethyl (3,4-epoxy)cyclohexanecarboxylate; available typically under the trade name of CELLOXIDE 2021P (from Daicel Corporation)]. The compound is preferred particularly from the viewpoints of heat resistance and handleability.

### Amine Compound (ii)

The amine compound (ii) acting as a raw material (precursor) to form the epoxy-amine adduct (A) is a polyamine compound having two or more amino groups (-NH₂; unsubstituted amino groups) per molecule. The amine compound (ii) may have the amino groups in a number per molecule not critical, as long as being 2 or more, but preferably from 2 to 6, more preferably from 2 to 5, and furthermore preferably 2 or 3. The amine compound (ii), if having the amino groups in a number greater than 6, may cause the epoxy-amine adduct (A) to be hardly blended with another component.

The amine compound (ii) may have a molecular weight not critical, but preferably from 80 to 10000, more preferably from 100 to 5000, and furthermore preferably from 200 to 1000. The amine compound (ii), if having a molecular weight less than 80, may cause the epoxy-amine adduct (A) to include after-mentioned -NH- group (substituted amino group) in an excessively large amount, and this may cause the cured product of the curable resin composition to be excessively brittle. In contrast, the amine compound (ii), if having a molecular weight greater than 10000, may fail to enjoy a sufficient effect of the reaction with the epoxy compound (i). In addition or alternatively, the amine compound (ii) in this case may fail to help the epoxy-amine adduct (A) to sufficiently effectively function upon incorporation. Typically, the epoxy-amine adduct (A) may fail to sufficiently effectively contribute to better heat resistance of the cured product and to better heat resistance and toughness of the fiber-reinforced composite material.

The amine compound (ii) is exemplified by amine compounds (r-valent amine compounds) represented by Formula (b) :
[Chem. 7]

   R²(NH₂)ᵣ (b)

In Formula (b), r represents an integer of 2 or more. The number r is not critical, as long as being 2 or more, but is preferably from 2 to 6, more preferably from 2 to 5, and furthermore preferably 2 or 3.

R² in Formula (b) represents an organic group (organic residue) having a valency of r and having a carbon atom at each bonding site with the nitrogen atom specified in the formula. R² is exemplified by r-valent linear or branched chain aliphatic hydrocarbon groups; r-valent cyclic aliphatic hydrocarbon groups; r-valent aromatic hydrocarbon groups; and r-valent groups each including two or more of these groups bonded to each other directly or via a heteroatom-containing linkage group (divalent group).

The r-valent linear or branched chain aliphatic hydrocarbon groups are exemplified by divalent linear or branched chain aliphatic hydrocarbon groups, trivalent linear or branched chain aliphatic hydrocarbon groups, and tetravalent linear or branched chain aliphatic hydrocarbon groups. The divalent linear or branched chain aliphatic hydrocarbon groups are exemplified by alkylene groups including C₁-C₃₀ linear or branched chain alkylene groups such as methylene, ethylene, propylene, butylene, pentylene, hexylene, heptylene, octylene, nonylene, decylene, undecylene, dodecylene, tridecylene, tetradecylene, pentadecylene, hexadecylene, heptadecylene, and octadecylene groups, of which C₁-C₁₈ alkylene groups are preferred; and alkenylene groups including alkenylene groups corresponding to the alkylene groups, including C₂-C₃₀ linear or branched chain alkenylene groups such as vinylene and allylene groups, of which C₂-C₁₈ alkenylene groups are preferred. The trivalent linear or branched chain aliphatic hydrocarbon groups are exemplified by alkane-triyl groups including C₃-C₃₀ linear or branched chain alkane-triyl groups such as propane-triyl and 1,1,1-trimethylpropane-triyl groups, of which C₃-C₁₈ alkane-triyl groups are preferred. The tetravalent linear or branched chain aliphatic hydrocarbon groups are exemplified by alkane-tetrayl groups including C₄-C₃₀ linear or branched chain alkane-tetrayl groups such as butane-tetrayl and 2,2-dimethylpropane-tetrayl groups, of which C₄-C₁₈ alkane-tetrayl groups are preferred.

The r-valent linear or branched chain aliphatic hydrocarbon groups may each have one or more of various substituents. Specifically, at least one of hydrogen atoms of the r-valent linear or branched chain aliphatic hydrocarbon groups may be substituted with any of substituents. The substituents are exemplified by halogen, oxo, hydroxyl, substituted oxy (e.g., alkoxy, aryloxy, aralkyloxy, and acyloxy), carboxy, substituted oxycarbonyl (e.g., alkoxycarbonyl, aryloxycarbonyl, and aralkyloxycarbonyl), substituted or unsubstituted carbamoyl, cyano, nitro, substituted or unsubstituted amino, sulfo, and heterocyclic groups. The hydroxyl and carboxy groups may each be protected by a protecting group commonly used in organic syntheses. The protecting group is exemplified by acyl, alkoxycarbonyl, organic silyl, alkoxyalkyl, and oxacycloalkyl groups.

The substituted or unsubstituted carbamoyl groups are exemplified by carbamoyl groups each having an alkyl group or an acyl group; and unsubstituted carbamoyl group, where the alkyl group is exemplified by methyl, ethyl, propyl, isopropyl, n-butyl, s-butyl, and t-butyl groups, and the acyl group is exemplified by acetyl and benzoyl groups. The substituted or unsubstituted amino groups are exemplified by amino groups each having, for example, an alkyl group or an acyl group; and unsubstituted amino group, where the alkyl group is exemplified by methyl, ethyl, propyl, isopropyl, n-butyl, s-butyl, and t-butyl groups, and the acyl group is exemplified by acetyl and benzoyl groups.

Heterocyclic rings constituting the heterocyclic groups include aromatic heterocyclic rings and non-aromatic heterocyclic rings. Such heterocyclic rings are exemplified by heterocyclic rings containing oxygen as a heteroatom (oxygen-containing heterocyclic rings); heterocyclic rings containing sulfur as a heteroatom (sulfur-containing heterocyclic rings); and heterocyclic rings containing nitrogen as a heteroatom (nitrogen-containing heterocyclic rings). The oxygen-containing heterocyclic rings are exemplified by three-membered rings such as oxirane ring; four-membered rings such as oxetane ring; five-membered rings such as furan, tetrahydrofuran, oxazole, and γ-butyrolactone rings; six-membered rings such as 4-oxo-4H-pyran, tetrahydropyran, and morpholine rings; fused rings such as benzofuran, 4-oxo-4H-chromene, and chromane rings; and bridged rings such as 3-oxatricyclo[4.3.1.1^{4,8}]undecan-2-one and 3-oxatricyclo[4.2.1.0^{4,8}]nonan-2-one rings. The sulfur-containing heterocyclic rings are exemplified by five-membered rings such as thiophene, thiazole, and thiadiazole rings; six-membered rings such as 4-oxo-4H-thiopyran ring; and fused rings such as benzothiophene ring. The nitrogen-containing heterocyclic rings are exemplified by five-membered rings such as pyrrole, pyrrolidine, pyrazole, imidazole, and triazole rings; six-membered rings such as pyridine, pyridazine, pyrimidine, pyrazine, piperidine, and piperazine rings; and fused rings such as indole, indoline, quinoline, acridine, naphthyridine, quinazoline, and purine rings. The heterocyclic groups may each have one or more substituents. The substituents are exemplified by the substituents which the r-valent linear or branched chain aliphatic hydrocarbon groups may have; as well as alkyl groups including C₁-C₄ alkyl groups such as methyl and ethyl groups; cycloalkyl groups; and aryl groups such as phenyl and naphthyl groups. The nitrogen atom(s) constituting the heterocyclic rings may be protected by a common protecting group. The protecting group is exemplified by alkoxy, alkoxycarbonyl, alkenyloxycarbonyl, aralkyloxycarbonyl, aralkyl, acyl, arylsulfonyl, and alkylsulfonyl groups.

The r-valent cyclic aliphatic hydrocarbon groups are exemplified by divalent cyclic aliphatic hydrocarbon groups, trivalent cyclic aliphatic hydrocarbon groups, and tetravalent cyclic aliphatic hydrocarbon groups. The divalent cyclic aliphatic hydrocarbon groups are exemplified by cycloalkylene, cycloalkenylene, cycloalkylidene, cycloalkadienylene, and divalent polycyclic hydrocarbon groups. The cycloalkylene groups are exemplified by C₃-C₂₀ cycloalkylene groups such as cyclopropylene, cyclobutylene, cyclopentylene, and cyclohexylene groups, of which C₃-C₁₅ cycloalkylene groups are preferred. The cycloalkenylene groups are exemplified by cycloalkenylene groups corresponding to the cycloalkylene groups, including C₃-C₂₀ cycloalkenylene groups such as cyclohexenylene group, of which C₃-C₁₅ cycloalkenylene groups are preferred. The cycloalkylidene groups are exemplified by cycloalkylidene groups corresponding to the cycloalkylene groups, including C₃-C₂₀ cycloalkylidene groups such as cyclopentylidene and cyclohexylidene groups, of which C₃-C₁₅ cycloalkylidene groups are preferred. The cycloalkadienylene groups are exemplified by cycloalkadienylene groups corresponding to the cycloalkylene groups, including C₄-C₂₀ cycloalkadienylene groups such as cyclopentadienylene group, of which C₄-C₁₅ cycloalkadienylene groups are preferred. The divalent polycyclic hydrocarbon groups are exemplified by divalent spiro hydrocarbon groups including diyl groups corresponding to spiro hydrocarbons such as spiro[4.4]nonane and spiro[4.5]decane; divalent groups corresponding to hydrocarbon ring assemblies, including diyl groups corresponding to hydrocarbon ring assemblies such as bicyclopropyl; and divalent bridged hydrocarbon groups including diyl groups corresponding to bridged hydrocarbons such as bicyclo[2.1.0]pentane, bicyclo[3.2.1]octane, norbornane, norbornene, and adamantane. The trivalent cyclic aliphatic hydrocarbon groups are exemplified by cycloalkane-triyl and polycyclic hydrocarbon-triyl groups. The tetravalent cyclic aliphatic hydrocarbon groups are exemplified by cycloalkane-tetrayl and polycyclic hydrocarbon-tetrayl groups. The r-valent cyclic aliphatic hydrocarbon groups may each have one or more of the substituents exemplified as substituents which the r-valent linear or branched chain aliphatic hydrocarbon groups may have.

The r-valent aromatic hydrocarbon groups are exemplified by groups corresponding to aromatic hydrocarbons, except for removing hydrogen in a number of r therefrom. The aromatic hydrocarbons are exemplified by benzene, naphthalene, anthracene, 9-phenylanthracene, 9,10-diphenylanthracene, naphthacene, pyrene, perylene, biphenyl, binaphthyl, and bianthryl. The r-valent aromatic hydrocarbon groups may each have one or more of the substituents exemplified as substituents which the r-valent linear or branched chain aliphatic hydrocarbon groups may have.

The heteroatom-containing linkage group (divalent group) is exemplified by divalent groups each containing one or more heteroatoms (e.g., oxygen, nitrogen, and sulfur atoms), such as -CO- (carbonyl group), -O- (ether bond), - CO-O- (ester bond), -O-CO-O- (carbonate group), -CO-NH-(amido group), -CO-NR^{a}- (substituted amido group; where R^{a} represents an alkyl group), -NH-, -NR^{b}- (where R^{b} represents an alkyl group), -SO-, and -SO₂-; and divalent groups each including two or more of them linked to each other.

As the amine compound (ii), preferred is a compound (polyetheramine) represented by Formula (b-1):

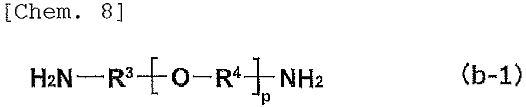

R³ in Formula (b-1) represents a divalent linear, branched chain, or cyclic aliphatic hydrocarbon group. The divalent linear, branched chain, or cyclic aliphatic hydrocarbon group is exemplified by the divalent linear, branched chain, or cyclic aliphatic hydrocarbon groups exemplified as R². The divalent linear, branched chain, or cyclic aliphatic hydrocarbon group as R³ may have one or more substituents. The substituents are exemplified by the substituents which the r-valent linear or branched chain aliphatic hydrocarbon groups may have.

Among them, R³ is preferably a divalent linear or branched chain aliphatic hydrocarbon group, more preferably a C₂-C₆ linear or branched chain alkylene group, furthermore preferably a C₂-C₄ linear or branched chain alkylene group, and particularly preferably ethylene, trimethylene, or propylene group.

R⁴ in Formula (b-1) represents, in each occurrence independently, a divalent linear, branched chain, or cyclic aliphatic hydrocarbon group. The divalent linear, branched chain, or cyclic aliphatic hydrocarbon group is exemplified by the divalent linear, branched chain, or cyclic aliphatic hydrocarbon groups exemplified as R². The divalent linear, branched chain, or cyclic aliphatic hydrocarbon group as R⁴ may have one or more substituents. The substituents are exemplified by the substituents which the r-valent linear or branched chain aliphatic hydrocarbon groups may have.

Among them, R⁴ is, in each occurrence independently, preferably a divalent linear or branched chain aliphatic hydrocarbon group, more preferably a C₂-C₆ linear or branched chain alkylene group, furthermore preferably a C₂-C₄ linear or branched chain alkylene group, and particularly preferably ethylene, trimethylene, or propylene group. When the repetition number p is an integer of 2 or more, R⁴ in the respective pairs of brackets (R⁴ in two or more occurrences) may be identical or different. When R⁴ in two or more occurrences is different from each other, the structures in the respective pairs of brackets with p may be added (polymerized) in a random form or block form.

In Formula (b-1), p indicates the repetition number of the structural unit in the brackets with p and represents an integer of 1 or more. The repetition number p is typically preferably from 1 to 100, more preferably from 1 to 70, and furthermore preferably from 1 to 30. The amine compound, if having a repetition number p greater than 100, may cause the cured product and/or the fiber-reinforced composite material to be insufficient in heat resistance and/or mechanical properties (such as toughness) in some uses.

In Formula (b-1), R³ and R⁴ in each occurrence may be identical or different.

The amine compound (ii) is also exemplified by a compound (polyetheramine) represented by Formula (b-2):

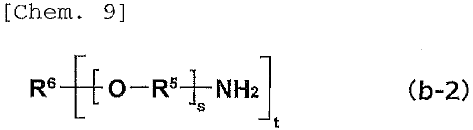

In Formula (b-2), s indicates the repetition number of the structural unit in the brackets with s, represents an integer of 1 or more, and is preferably from 1 to 100, more preferably from 1 to 70, and furthermore preferably from 1 to 30. In Formula (b-2), t indicates the number of the structure bonded to R⁶ and indicated in the brackets. The number t represents an integer of 3 or more and is preferably from 3 to 6, more preferably from 3 to 5, and furthermore preferably 3 or 4.

In Formula (b-2), R⁵ represents, in each occurrence independently, a divalent linear, branched chain, or cyclic aliphatic hydrocarbon group, which is exemplified by the divalent linear, branched chain, or cyclic aliphatic hydrocarbon groups exemplified as R². R⁶ represents an organic group having a valency of t and having a carbon atom at each bonding site with the oxygen atom specified in the formula. The organic group as R⁶ is exemplified by groups as with R², such as t-valent linear or branched chain aliphatic hydrocarbon groups and t-valent cyclic aliphatic hydrocarbon groups.

The amine compound (ii) may also be available as commercial products typically under the trade names of JEFFAMINE D-230, JEFFAMINE D-400, JEFFAMINE D-2000, JEFFAMINE D-4000, JEFFAMINE HK-511, JEFFAMINE ED-600, JEFFAMINE ED-900, JEFFAMINE ED-2003, JEFFAMINE EDR-148, JEFFAMINE EDR-176, JEFFAMINE XTJ-582, JEFFAMINE XTJ-578, JEFFAMINE XTJ-542, JEFFAMINE XTJ-548, JEFFAMINE XTJ-559, JEFFAMINE T-403, JEFFAMINE T-3000, and JEFFAMINE T-5000 (each from Huntsman Corporation).

### Epoxy-amine Adduct (A) Production Method: Reaction between epoxy compound (i) and amine compound (ii)

The epoxy-amine adduct (A) may be produced by allowing the epoxy compound (i) and the amine compound (ii) to react with each other. More specifically, the alicyclic epoxy groups of the epoxy compound (i) are allowed to react with the amino groups of the amine compound (ii) and give the epoxy-amine adduct (A).

Each of different epoxy compounds (i) may be used alone or in combination to form the epoxy-amine adduct (A). Likewise, each of different amine compounds (ii) may be used alone or in combination.

The reaction (reaction between the epoxy compound (i) and the amine compound (ii)) may be allowed to proceed in the presence of, or in the absence of (i.e., without the use of), a solvent. The solvent is not limited, but is preferably one in which the epoxy compound (i) and the amine compound (ii) can be dissolved or dispersed uniformly. More specifically, the solvent is exemplified by aliphatic hydrocarbons such as hexane, heptane, and octane; alicyclic hydrocarbons such as cyclohexane; aromatic hydrocarbons such as benzene, toluene, xylenes, and ethylbenzene; halogenated hydrocarbons such as chloroform, dichloromethane, and 1,2-dichloroethane; ethers such as diethyl ether, dimethoxyethane, tetrahydrofuran, and dioxane; ketones such as acetone, methyl ethyl ketone, and methyl isobutyl ketone; esters such as methyl acetate, ethyl acetate, isopropyl acetate, and butyl acetate; amides such as N,N-dimethylformamide and N,N-dimethylacetamide; nitriles such as acetonitrile, propionitrile, and benzonitrile; alcohols such as methanol, ethanol, isopropyl alcohol, and butanol; and dimethyl sulfoxide. Each of different solvents may be used alone or in combination.

The reaction may be allowed to proceed in the presence of, or in the absence of (substantially in the absence of), a catalyst. More specifically, when an aromatic amine compound is used as the amine compound (ii), the reaction is preferably allowed to proceed in the presence of a catalyst. The "aromatic amine compound" refers to a compound having an amino group substituted on an aromatic ring. In contrast, when a non-aromatic amine compound is used as the amine compound (ii), the reaction is preferably allowed to proceed in the absence of a catalyst, where the "non-aromatic amine compound" refers to an amine compound other than the aromatic amine compound.

The catalyst is exemplified by, but not limited to, curing accelerators used in curing of epoxy resins (epoxy compounds) with amine curing agents. Specifically, the catalyst is exemplified by tertiary amines, tertiary amine salts, imidazoles, organic phosphorus compounds, onium salts, strong acid esters, complexes between a Lewis acid and a base, and organometallic salts. The tertiary amines are exemplified by lauryldimethylamine, N,N-dimethylcyclohexylamine, N,N-dimethylbenzylamine, N,N-dimethylaniline, (N,N-dimethylaminomethyl)phenol, 2,4,6-tris(N,N-dimethylaminomethyl)phenol, 1,8-diazabicyclo[5.4.0]undecene-7 (DBU), and 1,5-diazabicyclo[4.3.0]nonene-5 (DBN). The tertiary amine salts are exemplified by carboxylic acid salts, sulfonic acid salts, and inorganic acid salts of the tertiary amines. The imidazoles are exemplified by 2-methylimidazole, 2-ethylimidazole, 1,2-dimethylimidazole, 2-ethyl-4-methylimidazole, 2-phenylimidazole, 2-phenyl-4-methylimidazole, and 1-benzyl-2-methylimidazole. The organic phosphorus compounds are exemplified by triphenylphosphine and triphenyl phosphite. The onium salts are exemplified by quaternary ammonium salts such as tetraethylammonium bromide and tetrabutylammonium bromide; quaternary phosphonium salts such as tetrabutylphosphonium decanoate, tetrabutylphosphonium laurate, tetrabutylphosphonium myristate, tetrabutylphosphonium palmitate, a salt between tetrabutylphosphonium cation and anion of bicyclo[2.2.1]heptane-2,3-dicarboxylic acid and/or methylbicyclo[2.2.1]heptane-2,3-dicarboxylic acid, and a salt between tetrabutylphosphonium cation and an anion of 1,2,4,5-cyclohexanetetracarboxylic acid; quaternary arsonium salts; tertiary sulfonium salts; tertiary selenonium salts; secondary iodonium salts; and diazonium salts. The strong acid esters such as sulfuric esters, sulfonic acid esters, phosphoric esters, phosphinic acid esters, and phosphonic acid esters. The complexes between a Lewis acid and a base are exemplified by boron trifluoride-aniline complex, boron trifluoride-p-chloroaniline complex, boron trifluoride-ethylamine complex, boron trifluoride-isopropylamine complex, boron trifluoride-benzylamine complex, boron trifluoride-dimethylamine complex, boron trifluoride-diethylamine complex, boron trifluoride-dibutylamine complex, boron trifluoride-piperidine complex, boron trifluoride-dibenzylamine complex, and boron trichloride-dimethyloctylamine complex. The organometallic salts are exemplified by tin octanoate, zinc octanoate, dibutyltin dilaurate, and aluminum complex of acetylacetone.

Particularly when the non-aromatic amine compound is used as the amine compound (ii), the catalyst may be used in an amount not critical, but preferably less than 1 part by weight (e.g., from 0 to less than 1 part by weight), more preferably less than 0.5 part by weight, and furthermore preferably less than 0.3 parts by weight, per 100 parts by weight of the epoxy compound (i). The catalyst, if used in an amount of 1 part by weight or more, may cause a -NH-group formed by the reaction between the epoxy compound (i) and the amine compound (ii) to further react with the alicyclic epoxy group(s) of the epoxy compound (i) and may thereby cause the resulting epoxy-amine adduct (A) to be hardly blended with another component.

In contrast, when the aromatic amine compound is used as the amine compound (ii), the catalyst may be used in an amount not critical, but preferably from 0.1 to 10 parts by weight, more preferably from 0.5 to 8 parts by weight, and furthermore preferably from 1 to 5 parts by weight, per 100 parts by weight of the epoxy compound (i). The catalyst, if used in an amount less than 0.1 part by weight, may fail to help the reaction between the epoxy compound (i) and the amine compound (ii) to proceed sufficiently. In contrast, the catalyst, if used in an amount greater than 10 parts by weight, may invite an economical disadvantage.

The ratio between the epoxy compound (i) and the amine compound (ii) to be subjected to the reaction is not critical, but is preferably adapted so that the ratio [alicyclic epoxy group/amino group] of the alicyclic epoxy groups of the epoxy compound (i) to the amino groups of the amine compound (ii) in the reaction is preferably from 0.05 to 1.00, more preferably from 0.10 to 0.95, and furthermore preferably from 0.15 to 0.90. The reaction, if performed at a ratio [alicyclic epoxy group/amino group] less than 0.05, may cause the amine compound (ii) to remain as unreacted in a large amount. In contrast, the reaction, if performed at a ratio [alicyclic epoxy group/amino group] greater than 1.00, may cause the alicyclic epoxy compound (i) to remain as unreacted.

The reaction may be performed at a temperature (reaction temperature) not critical, but preferably from 30°C to 250°C, more preferably from 80°C to 200°C, and furthermore preferably from 120°C to 180°C. The reaction, if performed at a temperature lower than 30°C, may proceed at a low reaction rate and may thereby cause the epoxy-amine adduct (A) to be produced with lower productivity. In contrast, the reaction, if performed at a temperature higher than 250°C, may cause the epoxy compound (i) and/or the amine compound (ii) to decompose and may cause the epoxy-amine adduct (A) to be produced in a lower yield. The reaction temperature may be controlled so as to be always constant (substantially constant) or to be varied stepwise or continuously during the reaction.

The reaction may be performed for a time (reaction time) not critical, but preferably from 0.2 to 20 hours, more preferably from 0.5 to 10 hours, and furthermore preferably from 1 to 5 hours. The reaction, if performed for a time shorter than 0.2 hour, may cause the epoxy-amine adduct (A) to be produced in a lower yield. In contrast, the reaction, if performed for a time longer than 20 hours, may cause the epoxy-amine adduct (A) to be produced with lower productivity.

The reaction may be performed under any pressure, such as under normal atmospheric pressure, under pressure (under a load), or under reduced pressure. The reaction may also be performed in any atmosphere not limited, such as an inert gas (e.g., nitrogen or argon) or air atmosphere.

The reaction may be performed in any system selected from batch, semi-batch, and continuous flow systems without limitation. For example, the reaction, when performed according to a batch system, may be performed typically by charging the epoxy compound (i), the amine compound (ii), and optional components such as a solvent according to necessity in a batch reactor; and, where necessary, further heating and/or stirring them.

The reaction (reaction between the epoxy compound (i) and the amine compound (ii)) gives an epoxy-amine adduct (A). After the reaction, the epoxy-amine adduct (A) can be separated and purified typically by a known or customary separation means such as filtration, concentration, distillation, extraction, crystallization, recrystallization, or column chromatography, or a separation means as any combination of them.

The epoxy-amine adduct (A) has amino groups (-NH₂; unsubstituted amino groups) in a number of 2 or more, preferably from 2 to 10, more preferably from 2 to 4, and furthermore preferably 2 or 3. The epoxy-amine adduct (A) is substantially devoid of epoxy groups (particularly alicyclic epoxy groups derived from the epoxy compound (i)).

The amino groups (-NH₂; unsubstituted amino groups) in the epoxy-amine adduct (A) may be positioned at any positions not limited, but are generally positioned at molecular chain ends of the epoxy-amine adduct (A). In particular, the amino groups are positioned at both ends of the molecular chain of the epoxy-amine adduct (A) when it is a linear epoxy-amine adduct (A). The positions, however, are not limited thereto.

The epoxy-amine adduct (A) is formed by the reaction of the alicyclic epoxy groups of the epoxy compound (i) with the amino groups (-NH₂; unsubstituted amino groups) of the amine compound (ii), as described above. The epoxy-amine adduct (A) generally has one or more -NH- groups per molecule. This is probably because the -NH- group (substituted amino group) formed by the reaction between the alicyclic epoxy group and the amino group has poor reactivity with the alicyclic epoxy groups of the epoxy compound (i). The epoxy-amine adduct (A) may have the -NH-group in a number not critical, but preferably from 1 to 200, more preferably from 1 to 150, and furthermore preferably from 2 to 100, per molecule. The epoxy-amine adduct (A), if devoid of -NH- groups, may offer low reactivity, or, in some uses, may cause the cured product and/or the fiber-reinforced composite material to be insufficient in heat resistance and/or mechanical strengths. The number of the - NH- group in the epoxy-amine adduct (A) can be calculated typically by determining the numbers of the epoxy compound (i) and the amine compound (ii) both constituting the epoxy-amine adduct (A) based on a molecular weight measured by gel permeation chromatography (GPC) and calibrated with a polystyrene standard.

In contrast, assume that the amine compound (ii) is allowed to react typically with a glycidyl-containing epoxy compound. In this case, the resulting compound (epoxy-amine adduct) generally contains substantially no -NH- group as remaining. This is because, although the reaction between the glycidyl group and the amino group (unsubstituted amino group) also gives an -NH- group, the -NH- group and the glycidyl group are highly reactive with each other.

The epoxy-amine adduct (A) may have a number-average molecular weight not critical, but preferably from 200 to 40000, more preferably from 300 to 30000, and furthermore preferably from 400 to 20000. The epoxy-amine adduct (A), if having a number-average molecular weight less than 200, may insufficiently give rise to functions as the epoxy-amine adduct (A). In contrast, the epoxy-amine adduct (A), if having a number-average molecular weight greater than 40000, may be hardly blended with another component such as the epoxy compound (B). The number-average molecular weight of the epoxy-amine adduct (A) can be calculated typically based on a molecular weight measured by gel permeation chromatography (GPC) and calibrated with a polystyrene standard.

The epoxy-amine adduct (A) may have a glass transition temperature (Tg) not critical, but preferably from -50°C to 200°C, more preferably from -40°C to 190°C, and furthermore preferably from -30°C to 180°C. The epoxy-amine adduct (A), if having a glass transition temperature Tg lower than -50°C, may cause the cured product and/or the fiber-reinforced composite material to be insufficient in heat resistance and/or mechanical properties in some uses. In contrast, the epoxy-amine adduct (A), if having a glass transition temperature Tg higher than 200°C, may be hardly blended with another component. The glass transition temperature of the epoxy-amine adduct (A) may be measured typically by differential scanning calorimetry (DSC) and/or dynamic viscoelastic measurement.

In an embodiment, the epoxy-amine adduct (A) is formed from the compound represented by Formula (a) as the epoxy compound (i); and the compound represented by Formula (b) where r is 2 as the amine compound (ii). The epoxy-amine adduct (A) in this embodiment is represented by Formula (I) below. The epoxy-amine adduct represented by Formula (I) is also referred to as an "epoxy-amine adduct (A')."

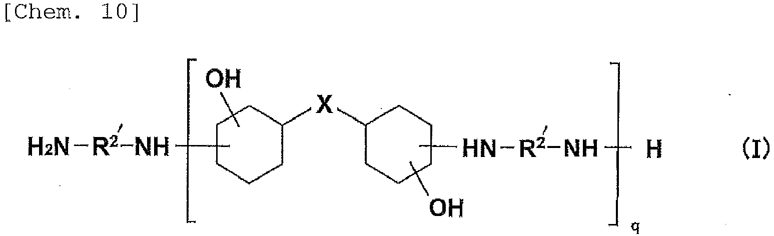

R^{2'} in Formula (I) represents, in each occurrence independently, a divalent organic group having a carbon atom at each bonding site with the nitrogen atom specified in the formula (organic residue) and is exemplified by the divalent groups exemplified as R² in Formula (b).

X in Formula (I) is, in each occurrence independently, selected from a single bond and a linkage group (divalent group having at least one atom) and is as with X in Formula (a). When q is an integer of 2 or more, X in two or more occurrences may be identical or different.

In Formula (I), q indicates the repetition number of the structural unit in the brackets with q and represents an integer of 1 or more. The repetition number q is not critical, but preferably from 1 to 200, more preferably from 2 to 150, and furthermore preferably from 2 to 100. The epoxy-amine adduct (A), if having a repetition number q greater than 200, may be hardly blended with another component. The repetition number q in Formula (I) is controllable typically by the ratio between the epoxy compound (i) and the amine compound (ii) to be subjected to the reaction, as well as reaction conditions.

Assume that, of carbon atoms constituting each cyclohexane ring specified in Formula (I), a carbon atom to which X is bonded is designated as a "1-position" carbon atom. In this case, the nitrogen atom (-NH-) bonded to the cyclohexane ring in Formula (I) is located on the 3-position carbon atom or at the 4-position carbon atom. When the nitrogen atom is located on the 3-position carbon atom, the hydroxyl group (-OH) bonded to the cyclohexane ring in Formula (I) is positioned at the 4-position carbon atom. When the nitrogen atom is located on the 4-position carbon atom of the cyclohexane ring, the hydroxyl group (-OH) bonded to the cyclohexane ring in Formula (I) is located on the 3-position carbon atom. The bonding positions of the nitrogen atoms (or the bonding positions of the hydroxyl groups) in the plural (two or more) cyclohexane rings may be identical or different. When carbon atoms constituting the cyclohexane rings in Formula (I) are designated with the locants, Formula (I) is expressed as follows:

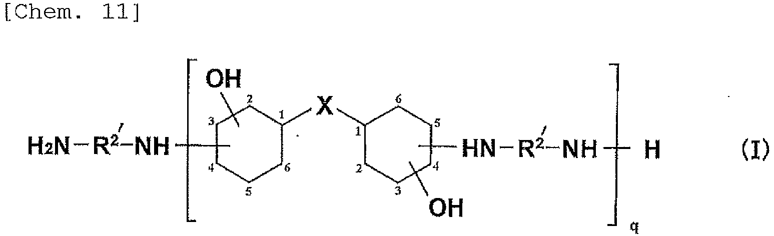

The epoxy-amine adduct (A), when represented by Formula (I), may be a mixture of two or more epoxy-amine adducts having different repetition numbers q.

Of the epoxy-amine adducts represented by Formula (I), preferred are epoxy-amine adducts represented by Formula (I-1), and more preferred are epoxy-amine adducts represented by Formula (I-2). X and q in Formula (I-1) and q in Formula (I-2) are as with X and q in Formula (I), respectively. In Formulae (I-1) and (I-2), p represents, in each occurrence independently, an integer of 1 or more and is as with p in Formula (b-1). In Formulae (I-1) and (I-2), R³ and R⁴ represent, in each occurrence independently, a divalent aliphatic hydrocarbon group (a divalent linear, branched chain, or cyclic aliphatic hydrocarbon group) and are as with R³ and R⁴ in Formula (b-1). When p is an integer of 2 or more, corresponding R⁴ in two or more occurrences may be identical or different. When R⁴ in two or more occurrences is different from each other, the structures in the respective pairs of brackets with p may be added (polymerized) in a random form or block form. R³ and R⁴ may be identical groups or different groups in each occurrence.

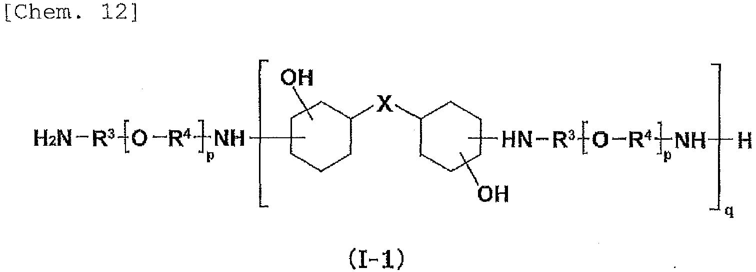

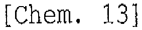

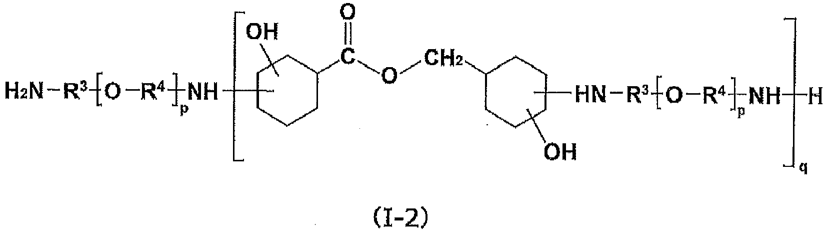

The epoxy-amine adduct (A) may also be available as a commercial product. The curable resin composition according to the present invention may contain each of different epoxy-amine adducts (A) alone or in combination.

The curable resin composition according to the present invention may contain the epoxy-amine adduct (A) in a content (blending amount) not critical, but preferably from 1 to 99 percent by weight, more preferably from 10 to 90 percent by weight, furthermore preferably from 20 to 80 percent by weight, and particularly preferably from 30 to 70 percent by weight, based on the total amount (100 percent by weight) of the curable resin composition. The curable resin composition, if containing the epoxy-amine adduct (A) in a content less than 1 percent by weight, may cause the cured product and/or the fiber-reinforced composite material to have insufficient heat resistance, and/or may cause the fiber-reinforced composite material to offer insufficient adhesion between the resin and the reinforcing fiber, in some uses. In contrast, the curable resin composition, if containing the epoxy-amine adduct (A) in a content greater than 99 percent by weight, may cause the cured product and/or the fiber-reinforced composite material to have insufficient mechanical strengths in some uses.

### Epoxy Compound (B)

The epoxy compound (B) for use in the curable resin composition according to the present invention is selected from the group consisting of epoxy compounds having two or more epoxy groups per molecule and excluding the epoxy compounds (i). Specifically, the epoxy compound (B) is exemplified by aromatic glycidyl ether epoxy compounds such as bisphenol-A epoxy compounds, bisphenol-F epoxy compounds, biphenol epoxy compounds, phenol novolac epoxy compounds, cresol novolac epoxy compounds, bisphenol-A cresol novolac epoxy compounds, naphthalene epoxy compounds, and epoxy compounds derived from trisphenolmethane; aliphatic glycidyl ether epoxy compounds such as aliphatic polyglycidyl ethers; glycidyl ester epoxy compounds; glycidylamine epoxy compounds; and alicyclic epoxy compounds other than the epoxy compounds (i), such as hydrogenated glycidyl ether epoxy compounds and compounds each including an epoxy group directly bonded to an alicycle via a single bond.

The compounds including an epoxy group directly bonded to an alicycle via a single bond are exemplified by compounds represented by Formula (II):

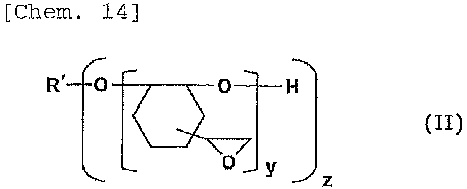

In Formula (II), R' is a group (residue) corresponding to a z-hydric alcohol, except for removing -OH in a number of z therefrom; and z and y in each occurrence independently represents a natural number. The z-hydric alcohol [R'-(OH)_{z}] is exemplified by polyhydric alcohols (including C₁-C₁₅ alcohols) such as 2,2-bis(hydroxymethyl)-1-butanol. The numbers z and y are preferably from 1 to 6 and from 1 to 30, respectively. When z is 2 or more, y in two or more occurrences in the groups in the large brackets may be identical or different. Specifically, the compounds are exemplified by an 1,2-epoxy-4-(2-oxiranyl)cyclohexane adduct of 2,2-bis(hydroxymethyl)-1-butanol.

The hydrogenated glycidyl ether epoxy compounds are exemplified by hydrogenated compounds derived from bisphenol-A epoxy compounds (hydrogenated bisphenol-A epoxy compounds) such as 2,2-bis[4-(2,3-epoxypropoxy)cyclohexyl]propane and 2,2-bis[3,5-dimethyl-4-(2,3-epoxypropoxy)cyclohexyl]propane; hydrogenated compounds derived from bisphenol-F epoxy compounds (hydrogenated bisphenol-F epoxy compounds) such as bis[o,o-(2,3-epoxypropoxy)cyclohexyl]methane, bis[o,p-(2,3-epoxypropoxy)cyclohexyl]methane, bis[p,p-(2,3-epoxypropoxy)cyclohexyl]methane, and bis[3,5-dimethyl-4-(2,3-epoxypropoxy)cyclohexyl]methane; hydrogenated biphenol epoxy compounds; hydrogenated phenol novolac epoxy compounds; hydrogenated cresol novolac epoxy compounds; hydrogenated cresol novolac epoxy compounds derived from bisphenol-A; hydrogenated naphthalene epoxy compounds; hydrogenated epoxy compounds prepared by hydrogenating epoxy compounds derived from trisphenolmethane.

Among them, preferred as the epoxy compound (B) are aromatic glycidyl ether epoxy compounds and aliphatic glycidyl ether epoxy compounds. These compounds are preferred from the viewpoint of mechanical properties (such as toughness) of the cured product.

The epoxy compound (B) may also be available as a commercial product. The curable resin composition according to the present invention may employ each of different epoxy compounds (B) alone or in combination.

The curable resin composition according to the present invention may contain the epoxy compound (B) in a content (blending amount) not critical, but preferably from 1 to 99 percent by weight, more preferably from 10 to 90 percent by weight, furthermore preferably from 20 to 80 percent by weight, and particularly preferably from 30 to 70 percent by weight, based on the total amount (100 percent by weight) of the curable resin composition. The curable resin composition, if containing the epoxy compound (B) in a content less than 1 percent by weight, may cause the cured product and/or the fiber-reinforced composite material to have insufficient heat resistance in some uses. In contrast, the curable resin composition, if containing the epoxy compound (B) in a content greater than 99 percent by weight, may cause the cured product and/or the fiber-reinforced composite material to have insufficient mechanical strengths, or may cause the fiber-reinforced composite material to offer insufficient adhesion between the resin and the reinforcing fiber in some uses.

The curable resin composition according to the present invention may further contain a curing accelerator. The curing accelerator is not limited and can be any of curing accelerators generally used in curing of epoxy compounds with amine curing agents so as to speed-up the curing rates. For example, the curing accelerator may be any of the catalysts usable in the production of the epoxy-amine adduct (A) (the catalysts usable in the reaction between the epoxy compound (i) and the amine compound (ii)). The curing accelerator is preferably used particularly when the aromatic amine compound is used as the amine compound (ii) to form the epoxy-amine adduct (A), and/or when the epoxy compound (B) has another epoxy group than glycidyl group.

The curable resin composition may contain the curing accelerator, upon use, in a content (blending amount) not critical, but preferably from 0.1 to 30 parts by weight, more preferably from 0.5 to 15 parts by weight, and furthermore preferably from 1 to 10 parts by weight, per 100 parts by weight of the epoxy-amine adduct (A). Control of the content of the curing accelerator within the range may enable efficient production of the cured product and/or the fiber-reinforced composite material with excellent heat resistance. The curing accelerator, however, does not always have to be used, as described above.

The curable resin composition according to the present invention may further contain any of other components than those mentioned above. Such other components are exemplified by customary additives such as polymerization initiators (e.g., thermal initiators and photoinitiators), curing agents (e.g., acid anhydrides), antifoaming agents, leveling agents, coupling agent (e.g., silane coupling agents), surfactants, inorganic fillers (e.g., silica and alumina), flame retardants, colorants, antioxidants, ultraviolet absorbers, ion adsorbents, pigments, phosphors, and releasing agents; thermoplastic resins; and thermosetting resins. The curable resin composition may contain such other components in a content (blending amount) not critical, but preferably 10 percent by weight or less (e.g., from 0 to 10 percent by weight), and more preferably 5 percent by weight or less, based on the total amount (100 percent by weight) of the curable resin composition.

The curable resin composition according to the present invention has only to contain at least the epoxy-amine adduct (A) and the epoxy compound (B) and may be produced (prepared) by any method not limited. Specifically, the curable resin composition may be prepared by stirring and mixing predetermined proportions of components constituting the curable resin composition. The stirring and mixing of the individual components may be performed with a known device such as a planetary centrifugal mixer, planetary mixer, kneader, or dissolver. The stirring and mixing may also be performed with heating according to necessity.

The curable resin composition according to the present invention, when cured, can give a cured product (cured resin). The curable resin composition according to the present invention is a thermosetting resin composition that can be cured by heating. The curing may employ another means in combination with heating. The other means than heating is exemplified by the application of any of active energy rays such as ultraviolet rays, infrared rays, visible light, and electron beams.

The curable resin composition according to the present invention may be cured under any conditions not critical, but may be cured typically at a heating temperature (curing temperature) preferably from 20°C to 250°C, and more preferably from 40°C to 200°C, for a heating time (curing time) preferably from 0.1 to 480 minutes, more preferably from 10 to 240 minutes, and furthermore preferably from 30 to 180 minutes. The curable resin composition, if cured at an excessively low heating temperature and/or for an excessively short heating time, may cause the cured product to be inferior in heat resistance and/or mechanical properties due to insufficient curing. In contrast, the curable resin composition, if cured at an excessively high heating temperature and/or for an excessively long heating time, may suffer from decomposition and/or degradation of components in the composition.

When the curable resin composition according to the present invention is cured, the resulting cured product may offer a cure shrinkage not critical, but preferably 7% or less, and more preferably 5% or less, typically upon curing at 160°C for 3 hours. The cure shrinkage range is preferred from the viewpoint of the quality of the cured product. The cure shrinkage of the cured product may be measured typically according to JIS K6911.

The cured product of the curable resin composition according to the present invention (e.g., a cured product obtained by curing at 160°C for 3 hours) may have a glass transition temperature not critical, but preferably 80°C or higher (e.g., from 80°C to 250°C), and more preferably 90°C or higher. The cured product, if having a glass transition temperature lower than 80°C, may have insufficient heat resistance or may cause the fiber-reinforced composite material to have insufficient heat resistance in some uses. The glass transition temperature of the cured product may be measured typically by thermomechanical analysis (TMA) or with a dynamic mechanical spectrometer (DMS).

The cured product of the curable resin composition according to the present invention (e.g., a cured product obtained by curing at 160°C for 3 hours) may have a 5% weight loss temperature not critical, but preferably 280°C or higher (e.g., from 280°C to 400°C), more preferably 300°C or higher, furthermore preferably 320°C or higher, and particularly preferably 340°C or higher. The 5% weight loss temperature is hereinafter also referred to as "Td₅." The cured product, if having a 5% weight loss temperature lower than 280°C, may have insufficient heat resistance or may cause the fiber-reinforced composite material to have insufficient heat resistance in some uses. The 5% weight loss temperature of the cured product may be measured typically by simultaneous thermogravimetry and differential thermal analysis (TG-DTA).

The cured product of the curable resin composition according to the present invention (e.g., a cured product obtained by curing at 160°C for 3 hours) may have a flexural strength not critical, but preferably 60 MPa or more (e.g., from 60 to 500 MPa), and more preferably 80 MPa or more. The cured product of the curable resin composition according to the present invention (e.g., a cured product obtained by curing at 160°C for 3 hours) may have a flexural modulus not critical, but preferably 2000 MPa or more (e.g., from 2000 to 8000 MPa), and more preferably 2500 MPa or more. The cured product of the curable resin composition according to the present invention (e.g., a cured product obtained by curing at 160°C for 3 hours) may have a flexural elongation not critical, but preferably 2.0% or more (e.g., from 2.0% to 20%), and more preferably 2.5% or more. The flexural strength, flexural modulus, and flexural elongation of the cured product may be measured typically according to JIS K6911 (e.g., at a bending speed of 1 mm/min.)

The cured product of the curable resin composition according to the present invention (e.g., a cured product obtained by curing at 160°C for 3 hours) may have a water absorption not critical, but preferably 2.0% or less, and more preferably 1.0% or less. The water absorption is a value measured after immersion in water at 23°C for 24 hours. The water absorption of the cured product may be measured typically according to JIS K6911.

The cured product of the curable resin composition according to the present invention (e.g., a cured product obtained by curing at 160°C for 3 hours) may have a volume resistivity not critical, but preferably 1x 10¹⁵ Ω·m or more, and more preferably 5x 10¹⁵ Ω·m or more. The volume resistivity of the cured product may be measured typically according to JIS K6911.

The cured product obtained by curing the curable resin composition according to the present invention has excellent heat resistance. In particular, the cured product has much better heat resistance than a cured product obtained by curing a resin composition containing, instead of the epoxy-amine adduct (A), an epoxy compound (i) and an amine compound (ii) as precursors for the epoxy-amine adduct (A), namely, a resin composition containing the epoxy compound (i), the amine compound (ii), and the epoxy compound (B). This is probably because, as the epoxy-amine adduct (A) is previously obtained by allowing the epoxy compound (i) and the amine compound (ii) to react with each other, the use of the resulting epoxy-amine adduct (A) helps all structural units derived from the epoxy compound (i), the amine compound (ii), and the epoxy compound (B), respectively (particularly, structural units derived from the epoxy compound (i)) to be integrated into the cured product orderly.

### Fiber-reinforced Composite Material

The curable resin composition according to the present invention can form a highly heat-resistant cured product by curing and is preferably usable particularly as a resin composition (resin composition for a fiber-reinforced composite material) to form a composite material (fiber-reinforced composite material) of the cured product with a reinforcing fiber. Specifically, the reinforcing fiber is coated or impregnated with the curable resin composition according to the present invention to give a prepreg, the prepreg is cured and thereby yields a fiber-reinforced composite material. The prepreg is also referred to as a "prepreg according to the present invention"; whereas the fiber-reinforced composite material is also referred to as a "fiber-reinforced composite material according to the present invention." The fiber-reinforced composite material according to the present invention has the configuration and thereby excels in heat resistance and toughness.

The reinforcing fiber may be any of known or customary reinforcing fibers without limitation, but is exemplified by carbon fibers, glass fibers, aramid fibers, boron fibers, graphite fibers, silicon carbide fibers, high-strength polyethylene fibers, tungsten carbide fibers, and poly-p-phenylenebenzoxazole fibers (PBO fibers). The carbon fibers are exemplified by polyacrylonitrile (PAN) carbon fibers, pitch-based carbon fibers, and vapor-grown carbon fibers. Among them, carbon fibers, glass fibers, and aramid fibers are preferred from the viewpoint of mechanical properties (such as toughness). Each of different reinforcing fibers may be used alone or in combination.

The reinforcing fiber is not limited in its form and may be in the form of a filament (continuous fiber), a tow, a unidirectional material including tows unidirectionally aligned, a woven fabric, or a nonwoven fabric. Such woven fabrics of reinforcing fibers are exemplified by plain fabrics; twill fabrics; satin fabrics; and stitching sheets that are typified by non-crimp fabrics and produced by preparing a sheet including unidirectionally aligned fiber bundles or a sheet including such fiber bundles laminated with varying lamination angles, and stitching the sheet in order to create integrality of the fabric.

The prepreg according to the present invention may contain the reinforcing fiber in a content that is not critical and adjustable as needed.

The impregnation or coating of the reinforcing fiber with the curable resin composition according to the present invention may be performed by a process not limited, such as any of impregnation or coating processes in production methods for known or customary prepregs.

The prepreg according to the present invention may also be one prepared by impregnating or coating the reinforcing fiber with the curable resin composition according to the present invention; and further curing part of (namely, semi-curing) curable compounds (particularly, the epoxy-amine adduct (A) and the epoxy compound (B)) in the curable resin composition. The semi-curing may be performed typically by the application of heat and/or an active energy ray.

The fiber-reinforced composite material according to the present invention can be obtained by curing the prepreg according to the present invention as described above. The fiber-reinforced composite material may be produced by a process exemplified by, but not limited to, any of known or customary processes such as hand lay-up, pre-impregnation, RTM, pultrusion, filament winding, spray-up, or pultrusion molding.

The fiber-reinforced composite material according to the present invention is usable as materials for various structures without limitation, but is preferably usable as materials for structures including aircraft structures such as fuselages, main planes, tail assemblies, rotor blades, fairings, cowlings, and doors; spacecraft structures such as motor cases and main planes; artificial satellite body structures; automobile parts such as automobile chassis; railway vehicle body structures; bicycle body structures; ship body structures; wind turbine blades; pressure vessels; fishing rods; tennis rackets; golf club shafts; robot arms; and cables (e.g., cable cores).

### Examples

The present invention will be illustrated in further detail with reference to several examples below. It should be noted, however, that the examples are by no means intended to limit the scope of the invention.

### Production Example 1: Epoxy-amine adduct production

As an epoxy compound (i) and an amine compound (ii), there were used 3,4-epoxycyclohexylmethyl (3,4-epoxy)cyclohexanecarboxylate (trade name CELLOXIDE 2021P, supplied by Daicel Corporation) and an amine-terminated polypropylene glycol (trade name JEFFAMINE D-230, supplied by Huntsman Corporation), respectively.

With reference to Table 1, 30.0 parts by weight of the epoxy compound (i) and 35.9 parts by weight of the amine compound (ii) were mixed, subsequently allowed to react with each other with stirring at 160°C for 2 hours, and yielded an epoxy-amine adduct (amine adduct).

The glass transition temperature (Tg) of the epoxy-amine adduct obtained in Production Example 1 was measured with a differential scanning calorimeter (DSC) [supplied by Seiko Instruments Inc.]. The measurement was performed at a rate of temperature rise of 10°C/min. and measurement temperatures from -50°C to 250°C with two scans. The glass transition temperature was determined based on a DSC curve plotted in the second scan. The results are indicated in Table 1.

The viscosity of the epoxy-amine adduct obtained in Production Example 1 at 70°C was measured with an E-type viscometer (cone-and-plate viscometer) [TV-22, supplied by Toki Sangyo Co., Ltd.] at a measurement temperature of 70°C. The result is indicated in Table 1.

An eluting solvent was prepared by adding lithium bromide to dimethylformamide (DMF) to a molarity of 30 mM. The epoxy-amine adduct obtained in Production Example 1 was dissolved in the eluting solvent, filtrated through a 0.45-µm membrane filter to give a filtrate, and the filtrate was used as a molecular weight measurement sample. The measurement sample was subjected to measurements of the weight-average molecular weight (Mw), number-average molecular weight (Mn), peak-top molecular weight (Mp), and molecular weight distribution (Mw/Mn) of the epoxy-amine adduct. The results are indicated in Table 1.

### Production Example 2: Epoxy-amine adduct production

As an epoxy compound (i) and an amine compound (ii), there were used 3,4-epoxycyclohexylmethyl (3,4-epoxy)cyclohexanecarboxylate (trade name CELLOXIDE 2021P, supplied by Daicel Corporation) and an amine-terminated polypropylene glycol (trade name JEFFAMINE D-230, supplied by Huntsman Corporation), respectively.

With reference to Table 1, 20.0 parts by weight of the epoxy compound (i) and 34.6 parts by weight of the amine compound (ii) were mixed, subsequently allowed to react with each other with stirring at 160°C for 2 hours, and yielded an epoxy-amine adduct (amine adduct).

The glass transition temperature of the epoxy-amine adduct obtained in Production Example 2 was measured by the procedure of Production Example 1. The result is indicated in Table 1.

The viscosity of the epoxy-amine adduct obtained in Production Example 2 at 70°C was measured with an E-type viscometer [TV-22, supplied by Toki Sangyo Co., Ltd.] at a measurement temperature of 70°C. In addition, the viscosities at 25°C and at 45°C of the epoxy-amine adduct were also measured. The results of these measurements are indicated in Table 1.

### Production Example 3: Epoxy-amine adduct production

As an epoxy compound (i) and an amine compound (ii), there were used 3,4-epoxycyclohexylmethyl (3,4-epoxy)cyclohexanecarboxylate (trade name CELLOXIDE 2021P, supplied by Daicel Corporation) and an amine-terminated polypropylene glycol (trade name JEFFAMINE D-230, supplied by Huntsman Corporation), respectively.

The epoxy compound (i) (28.0 parts by weight) and the amine compound (ii) (34.0 parts by weight) were mixed, subsequently allowed to react with each other with stirring at 160°C for 2 hours, and yielded an epoxy-amine adduct (amine adduct).

### Production Example 4: Epoxy-amine adduct production

As an epoxy compound (i) and an amine compound (ii), there were used 3,4-epoxycyclohexylmethyl (3,4-epoxy)cyclohexanecarboxylate (trade name CELLOXIDE 2021P, supplied by Daicel Corporation) and an amine-terminated polypropylene glycol (trade name JEFFAMINE D-230, supplied by Huntsman Corporation), respectively.

The epoxy compound (i) (20.0 parts by weight) and the amine compound (ii) (34.5 parts by weight) were mixed, subsequently allowed to react with each other with stirring at 160°C for 2 hours, and yielded an epoxy-amine adduct (amine adduct).

[Table 1]

**TABLE 1**

| | | | | Production Example 1 | Production Example 2 |
|---|---|---|---|---|---|
| Synthesis | Raw material | CELLOXIDE 2021P | [part by weight] | 30.0 | 20.0 |
| | | JEFFAMINE D-230 | [part by weight] | 35.9 | 34.6 |
| | Epoxy-amine adduct synthesis conditions (raw material reaction conditions) | | | 160°C, 2 hrs | 160°C, 2 hrs |
| Properties | Glass transition temperature | | [°C] | 5.6 | -21.3 |
| | Viscosity | 70°C | [mPa·s] | 13970 | 497 |
| | | 45°C | [mPa·s] | - | 4942 |
| | | 25°C | [mPa·s] | - | 47880 |
| | Molecular weights | Mn | | 790 | - |
| | | Mw | | 2700 | - |
| | | Mp | | 1910 | - |
| | | Mw/Mn | | 3.4 | - |

### Example 1

With reference to Table 2, 65.9 parts by weight (indicated as precursors' amounts in Table 2) of the epoxy-amine adduct obtained in Production Example 1 and 70 parts by weight of a bisphenol-A epoxy resin (trade name EPOTOHTO YD-128, supplied by Nippon Steel Chemical Co., Ltd.) were blended by mixing and stirring them in a planetary centrifugal mixer (trade name AWATORIRENTARO (Thinky Mixer), supplied by THINKY CORPORATION) at 70°C for 5 minutes and yielded a curable resin composition. The viscosity of the curable resin composition was measured at 50°C with an E-type viscometer [TV-22, supplied by Toki Sangyo Co., Ltd.] and was found to be 6600 mPa·s.

Next, the above-prepared curable resin composition was placed in forming molds (3-mm deep and 4-mm deep casting molds), then heated at 160°C for 3 hours, and yielded a 3-mm thick cured product (cured resin) and a 4-mm thick cured product.

### Example 2

With reference to Table 2, 54.6 parts by weight (indicated as precursors' amounts in Table 2) of the epoxy-amine adduct obtained in Production Example 2 and 80 parts by weight of a bisphenol-A epoxy resin (trade name EPOTOHTO YD-128, supplied by Nippon Steel Chemical Co., Ltd.) were blended by mixing and stirring them in a planetary centrifugal mixer (trade name AWATORIRENTARO (Thinky Mixer), supplied by THINKY CORPORATION) at 70°C for 5 minutes and yielded a curable resin composition. The viscosity of the curable resin composition was measured at 50°C with an E-type viscometer [TV-22, supplied by Toki Sangyo Co., Ltd.] and was found to be 1420 mPa·s.

Next, the above-prepared curable resin composition was placed in forming molds (3-mm deep and 4-mm deep casting molds), then heated at 160°C for 3 hours, and yielded 3-mm thick cured product and 4-mm thick cured product, respectively.

### Example 3

With reference to Table 2, 62.0 parts by weight (indicated as precursors' amounts in Table 2) of the epoxy-amine adduct obtained in Production Example 3, 67 parts by weight of a bisphenol-A epoxy resin (trade name EPOTOHTO YD-128, supplied by Nippon Steel Chemical Co., Ltd.), and 5 parts by weight of neopentyl glycol diglycidyl ether (trade name PG-202, supplied by Nippon Steel Chemical Co., Ltd.) were blended by mixing and stirring them in a planetary centrifugal mixer (trade name AWATORIRENTARO (Thinky Mixer), supplied by THINKY CORPORATION) at 70°C for 5 minutes and yielded a curable resin composition. The viscosity of the curable resin composition was measured at 50°C with an E-type viscometer [TV-22, supplied by Toki Sangyo Co., Ltd.] and was found to be 5640 mPa·s.

Next, the above-prepared curable resin composition was placed in forming molds (3-mm deep and 4-mm deep casting molds), then heated at 160°C for 3 hours, and yielded 3-mm thick cured product and 4-mm thick cured product, respectively.

### Example 4

With reference to Table 2, 54.5 parts by weight (indicated as precursors' amounts in Table 2) of the epoxy-amine adduct obtained in Production Example 4, 75 parts by weight of a bisphenol-A epoxy resin (trade name EPOTOHTO YD-128, supplied by Nippon Steel Chemical Co., Ltd.), and 5 parts by weight of neopentyl glycol diglycidyl ether (trade name PG-202, supplied by Nippon Steel Chemical Co., Ltd.) were blended by mixing and stirring them in a planetary centrifugal mixer (trade name AWATORIRENTARO (Thinky Mixer), supplied by THINKY CORPORATION) at 70°C for 5 minutes and yielded a curable resin composition. The viscosity of the curable resin composition was measured at 50°C with an E-type viscometer [TV-22, supplied by Toki Sangyo Co., Ltd.] and was found to be 980 mPa·s.

Next, the above-prepared curable resin composition was placed in forming molds (3-mm deep and 4-mm deep casting molds), then heated at 160°C for 3 hours, and yielded 3-mm thick cured product and 4-mm thick cured product, respectively.

### Comparative Example 1

With reference to Table 2, 70 parts by weight of a bisphenol-A epoxy resin (trade name EPOTOHTO YD-128, supplied by Nippon Steel Chemical Co., Ltd.), 30 parts by weight of 3,4-epoxycyclohexylmethyl (3,4-epoxy)cyclohexanecarboxylate (trade name CELLOXIDE 2021P, supplied by Daicel Corporation), 35.9 parts by weight of an amine-terminated polypropylene glycol (trade name JEFFAMINE D-230, supplied by Huntsman Corporation), and 2.0 parts by weight of boron trifluoride-monoethylamine complex (supplied by STELLA CHEMIFA CORPORATION) were blended by mixing and stirring them in a planetary centrifugal mixer (trade name AWATORIRENTARO (Thinky Mixer), supplied by THINKY CORPORATION) at room temperature for 20 minutes and yielded a curable resin composition. The viscosity of the curable resin composition was measured at 25°C with an E-type viscometer [TV-22, supplied by Toki Sangyo Co., Ltd.] and was found to be 2911 mPa·s.

Next, the above-prepared curable resin composition was placed in forming molds (3-mm deep and 4-mm deep casting molds), then heated at 80°C for 2 hours, subsequently heated at 200°C for 2 hours, and yielded 3-mm thick cured product and 4-mm thick cured product, respectively.

### Comparative Example 2

With reference to Table 2, 100 parts by weight of a bisphenol-A epoxy resin (trade name EPOTOHTO YD-128, supplied by Nippon Steel Chemical Co., Ltd.) and 31.9 parts by weight of an amine-terminated polypropylene glycol (trade name JEFFAMINE D-230, supplied by Huntsman Corporation) were blended by mixing and stirring them in a planetary centrifugal mixer (trade name AWATORIRENTARO (Thinky Mixer), supplied by THINKY CORPORATION) at room temperature for 20 minutes and yielded a curable resin composition. The viscosity of the curable resin composition was measured at 25°C with an E-type viscometer [TV-22, supplied by Toki Sangyo Co., Ltd.] and was found to be 12750 mPa·s.

Next, the above-prepared curable resin composition was placed in forming molds (3-mm deep and 4-mm deep casting molds), then heated at 80°C for 2 hours, subsequently at 120°C for 2 hours, and yielded 3-mm thick cured product and 4-mm thick cured product, respectively.

### Comparative Example 3

With reference to Table 2, 100 parts by weight of 3,4-epoxycyclohexylmethyl (3,4-epoxy)cyclohexanecarboxylate (trade name CELLOXIDE 2021P, supplied by Daicel Corporation), 45.4 parts by weight of an amine-terminated polypropylene glycol (trade name JEFFAMINE D-230, supplied by Huntsman Corporation), and 2.0 parts by weight of boron trifluoride-monoethylamine complex (supplied by STELLA CHEMIFA CORPORATION) were blended by mixing and stirring them in a planetary centrifugal mixer (trade name AWATORIRENTARO (Thinky Mixer), supplied by THINKY CORPORATION) at room temperature for 20 minutes and yielded a curable resin composition. The viscosity of the curable resin composition was measured at 25°C with an E-type viscometer [TV-22, supplied by Toki Sangyo Co., Ltd.] and was found to be 250 mPa·s.

Next, the above-prepared curable resin composition was placed in forming molds (3-mm deep and 4-mm deep casting molds), then heated at 80°C for 2 hours, subsequently heated at 200°C for 2 hours, and yielded 3-mm thick cured product and 4-mm thick cured product, respectively.

### Comparative Example 4

With reference to Table 2, 88 parts by weight of a bisphenol-A epoxy resin (trade name EPOTOHTO YD-128, supplied by Nippon Steel Chemical Co., Ltd.), 12 parts by weight of neopentyl glycol diglycidyl ether (trade name PG-202, supplied by Nippon Steel Chemical Co., Ltd.), and 33.0 parts by weight of an amine-terminated polypropylene glycol (trade name JEFFAMINE D-230, supplied by Huntsman Corporation) were blended by mixing and stirring them in a planetary centrifugal mixer (trade name AWATORIRENTARO (Thinky Mixer), supplied by THINKY CORPORATION) at room temperature for 20 minutes and yielded a curable resin composition. The viscosity of the curable resin composition was measured at 25°C with an E-type viscometer [TV-22, supplied by Toki Sangyo Co., Ltd.] and was found to be 2832 mPa·s.

Next, the above-prepared curable resin composition was placed in forming molds (3-mm deep and 4-mm deep casting molds), then heated at 80°C for 2 hours, subsequently heated at 200°C for 2 hours, and yielded 3-mm thick cured product and 4-mm thick cured product, respectively.

### Evaluations

The curable resin compositions and cured products obtained in the examples were subjected to evaluations as follows.

### (1) Heat Resistance Test

Test specimens having a height of 10 mm and a cross-sectional area of 16 mm² were cut out from the cured products (4-mm thick) obtained in the examples and comparative examples. The glass transition temperatures (Tg, in degrees Celsius) of the test specimens were measured with a thermomechanical analyzer (TMA) (supplied by Seiko Instruments Inc.). The results are indicated in "Tg (°C) TMA" in Table 2.

Separately, the 5% weight loss temperatures (Td₅, in degrees Celsius) of the test specimens were measured with a simultaneous thermogravimetric and differential thermal analyzer (TG-DTA) (supplied by Seiko Instruments Inc.). The results are indicated in "Td₅ TG/DTA" in Table 2.

### (2) Flexural Strength Test (flexural modulus, flexural strength, and flexural elongation (flexural strain))

Test specimens 4 mm thick, 10 mm wide, and 80 mm long were prepared by processing the cured products (4-mm thick) obtained in the examples and comparative examples. The test specimens were subjected to flexural strength tests according to JIS K6911 at a bending speed of 1 mm/min. to measure the flexural modulus, flexural strength, and flexural elongation (flexural strain) of each cured product. The results are indicated in "Flexural modulus," "Flexural strength," and "Flexural elongation," respectively, in Table 2.

### (3) Volume Resistivity

The volume resistivities of the cured products obtained in the examples and comparative examples were measured according to JIS K6911. The results are indicated in "Volume resistivity" in Table 2.

### (4) Water Absorption

The water absorptions of the cured products obtained in the examples and comparative examples were measured according to JIS K6911. The results are indicated in "Water absorption" in Table 2.

### (5) Cure Shrinkage

The cure shrinkages upon curing of the curable resin compositions obtained in the examples and comparative examples were measured according to JIS K6911. The results are indicated in "Cure shrinkage" in Table 2.

[Table 2]

**TABLE 2**

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| Curable resin composition | Epoxy-amine adduct (amine adduct) | CELLOXIDE 2021P | 30.0 | 20.0 | 28.0 | 20.0 | - | - | - | - |
| | | JEFFAMINE D-230 | 35.9 | 34.6 | 34.0 | 34.5 | - | - | - | - |
| | Epoxy compound | EPOTOHTOYD-128 | 70 | 80 | 67 | 75 | 70 | 100 | - | 88 |
| | | CELLOXIDE 2021P | - | - | - | - | 30 | - | 100 | - |
| | | PG-202 | - | - | 5 | 5 | - | - | - | 12 |
| | Amine curing agent | JEFFAMINE D-230 | | | - | - | 35.9 | 31.9 | 45.4 | 33.0 |
| | Catalyst | BF₃-MEA | - | - | - | - | 2.0 | - | 2.0 | - |
| Curable resin composition curing conditions | | | 160°C, 3 hrs | 160°C, 3 hrs | 160°C, 3 hrs | 160°C, 3 hrs | 80°C,2 hrs 200°C, 2 hrs | 80°C, 2 hrs 120°C, 2 hrs | 8D°C,2 hrs 200°C, 2 hrs | 80°C, 2 hrs 120°C, 2 hrs |
| Cured Product | Tg (°C) | TMA | 105.1 | 102.3 | 98.7 | 93.4 | 87.6 | 88.3 | 75.7 | 73.0 |
| | Td₅ (°C) | TG/DTA | 351.0 | 351.2 | 344.7 | 346.1 | 319.9 | 352.5 | 274.1 | 336.8 |
| | Cure shrinkage (%) | | 3.6 | 4,6 | 4.5 | 4.3 | 5.0 | 3.7 | 5.8 | 4.2 |
| | Water absorption (%) | 23°C, 24 hrs test specimen | 0.32 | 0.27 | 0.35 | 0.32 | 0.37 | 0.21 | 3.82 | 0.21 |
| | Volume resistivity (Ω·cm) | | 1.21x 10¹⁶ | 1.23x 10¹⁶ | 7.69x 10¹⁵ | 9.55x 10¹⁵ | 2.35x 10¹⁵ | 2.36x 10¹⁶ | 1.10x 10¹⁵ | 1.07x 10¹⁶ |
| | Flexural strength (MPa) | | 95.7 | 105.5 | 106.0 | 104.2 | 113.3 | 90.8 | 93.4 | 90.0 |
| | Flexural modulus (MPa) | | 2632 | 2794 | 2802 | 2782 | 3106 | 2630 | 3337 | 2766 |
| | Flexural elongation (%) | | 3.5 | 3.0 | 6.2 | 6.1 | 3.2 | 4.3 | 2.9 | 3.8 |

As is demonstrated in Table 2, cured products prepared by curing the curable resin compositions obtained in the examples had high glass transition temperatures and high 5% weight loss temperatures and offered excellent heat resistance. In particular, the comparison between Example 1 and Comparative Example 1 demonstrates that the two samples significantly differed in heat resistance, although prepared from raw materials identical in types and amounts.

The components used in the examples and comparative examples are as follows:
Epoxy Compound
   CELLOXIDE 2021P: 3,4-Epoxycyclohexylmethyl (3,4-epoxy)cyclohexanecarboxylate, supplied by Daicel Corporation
   EPOTOHTO YD-128: Bisphenol-A epoxy resin, supplied by Nippon Steel Chemical Co., Ltd.
   PG-202: Neopentyl glycol diglycidyl ether, supplied by Nippon Steel Chemical Co., Ltd.
Amine Compound
   JEFFAMINE D-230: Amine-terminated polypropylene glycol, supplied by Huntsman Corporation
Catalyst (curing accelerator)
   BF₃-MEA: Boron trifluoride-monoethylamine complex, supplied by STELLA CHEMIFA CORPORATION

### Industrial Applicability

The curable resin composition according to the present invention, when cured, can form a highly heat-resistant cured product and is preferably usable particularly as a resin composition (resin composition for a fiber-reinforced composite material) to form a composite material between the cured product and a reinforcing fiber as a fiber-reinforced composite material. The fiber-reinforced composite material according to the present invention is usable as materials for various structures and is preferably usable as materials for structures including aircraft structures such as fuselages, main planes, tail assemblies, rotor blades, fairings, cowlings, and doors; spacecraft structures such as motor cases and main planes; artificial satellite body structures; automobile parts such as automobile chassis; railway vehicle body structures; bicycle body structures; ship body structures; wind turbine blades; pressure vessels; fishing rods; tennis rackets; golf club shafts; robot arms; and cables (e.g., cable cores).

## Claims

1. A curable resin composition comprising:
an epoxy-amine adduct (A); and
an epoxy compound (B),
the epoxy-amine adduct (A) having two or more amino groups per molecule and being obtained by a reaction of an epoxy compound (i) having two or more alicyclic epoxy groups per molecule with an amine compound (ii) having two or more amino groups per molecule; and
the epoxy compound (B) being other than the epoxy compound (i) and having two or more epoxy groups per molecule.

2. The curable resin composition according to claim 1,
wherein the epoxy compound (i) comprises a compound represented by Formula (a): 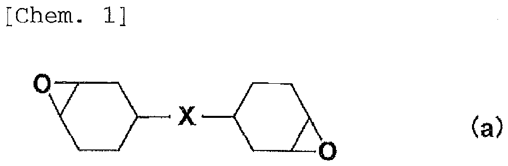 wherein X is selected from a single bond and a divalent group comprising at least one atom.

3. The curable resin composition according to one of claims 1 and 2,
wherein the amine compound (ii) comprises a compound represented by Formula (b):
[Chem. 2]
**R²(NH₂)ᵣ** **(b)**
wherein R² represents an organic group having a valency of r and having a carbon atom at each bonding site with the nitrogen atom specified in the formula; and r represents an integer of 2 or more.

4. A curable resin composition comprising:
an epoxy-amine adduct (A') represented by Formula (I); and
an epoxy compound (B) being selected from the group consisting of epoxy compounds with two or more epoxy groups per molecule and excluding epoxy compounds having two or more alicyclic epoxy groups per molecule, where Formula (I) is expressed as follows: 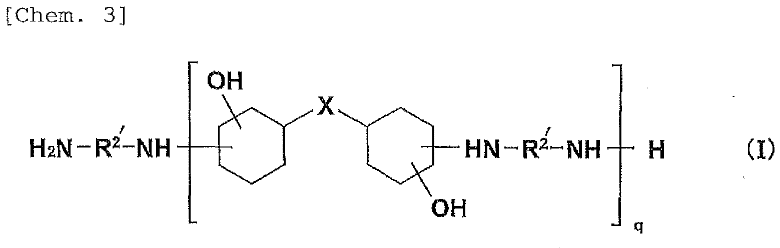 wherein R^{2'} represents, in each occurrence independently, a divalent organic group having a carbon atom at each bonding site with a nitrogen atom specified in the formula; X is, in each occurrence independently, selected from a single bond and a divalent group comprising at least one atom; and q represents an integer of 1 or more.

5. The curable resin composition according to any one of claims 1 to 4, as a resin composition for a fiber-reinforced composite material.

6. A cured product of the curable resin composition of any one of claims 1 to 5.

7. A prepreg comprising:
the curable resin composition of any one of claims 1 to 5; and
a reinforcing fiber impregnated or coated with the curable resin composition.

8. A fiber-reinforced composite material comprising a cured product of the prepreg of claim 7.
